# EUROPEAN PATENT SPECIFICATION

(11) **EP 3 471 450 B1**
(45) Date of publication and mention of the grant of the patent: **12.05.2021**
(21) Application number: 18187195.5
(22) Date of filing: 03.08.2018
(51) Int. Cl.: H04W 24/02, H04L 12/26, G06F 9/50, H04W 88/02

(54) **NETWORK BANDWIDTH MANAGEMENT METHOD, TERMINAL AND COMPUTER STORAGE MEDIUM**
NETZWERKBANDBREITENVERWALTUNGSVERFAHREN, ENDGERÄT UND COMPUTERSPEICHERMEDIUM
PROCÉDÉ DE GESTION DE BANDE PASSANTE DE RÉSEAU, TERMINAL ET SUPPORT D'INFORMATIONS INFORMATIQUE

(30) Priority: 11.10.2017 CN 201710946202
(43) Date of publication of application: 17.04.2019
(73) Proprietor: GUANGDONG OPPO MOBILE TELECOMMUNICATIONS CORP., LTD., Wusha, Chang'an Dongguan, Guangdong 523860 (CN)
(72) Inventor: LIN, Zhiyong, Dongguan, Guangdong 523860 (CN); LIU, Mei, Dongguan, Guangdong 523860 (CN); MO, Ruihong, Dongguan, Guangdong 523860 (CN); ZHANG, Jun, Dongguan, Guangdong 523860 (CN)
(74) Representative: Manitz Finsterwald Patent- und Rechtsanwaltspartnerschaft mbB

(56) References cited:
- EP-A1- 2 822 236
- EP-A1- 3 197 129
- US-A1- 2014 215 061
- US-A1- 2014 226 571

## Description

### TECHNICAL FIELD

The present disclosure relates to the field of terminal technologies, and particularly to a network bandwidth management method and a related product.

### BACKGROUND

There are various applications in a terminal device, so that requirements of a user on various aspects of work, entertainment, study and the like may be met, and great convenience is brought to the life of the user.

Wherein, when the user plays a game with the terminal device, for ensuring a speed and performance of the game, it is necessary to ensure that a game application may fully use a network resource, memory resource, Central Processing Unit (CPU) resource, Graphics Processing Unit (GPU) resource and Input/Output (I/O) resource of the terminal device. If use of the resources may not be fully ensured, problems of non-fluency, disconnection and the like may be caused, and a user experience of the user for the terminal device may be reduced.

EP3197129 A1 discloses a wireless communication device which includes a transceiver and processing circuitry. The transceiver is configured to establish a telecommunication connection with a total usable bandwidth. The processing circuitry is coupled to the transceiver.

US2014215061 A1 discloses a method for bandwidth optimization of network application.

US2014226571 A1 discloses apparatus and methods for dynamically allocating an available bandwidth among different applications running at an access terminal operating in a wireless communication system that may be subject to certain bandwidth constraints.

EP2822236 A1 provides a network bandwidth allocation method and terminal.

### SUMMARY

Embodiments of the disclosure provide a network bandwidth management method, terminal and storage medium.

The features of the method, terminal device and storage medium according to the present invention are defined in the independent claims, and the preferable features according to the present invention are defined in the dependent claims.

In the embodiments of the disclosure, under the condition that the first application in the terminal device is accessing the network, the request instruction of the second application for access to the network is acquired, wherein the first application is a game application; whether the presently unoccupied first network bandwidth of the terminal device is sufficient for the second application or not is determined; and if NO, whether the target application list includes the second application or not is determined, and if YES, the second network bandwidth is allocated to the second application for use, wherein the second network bandwidth is the smallest value of the network bandwidth required by the second application, and the second network bandwidth is smaller than the first network bandwidth. It can be seen that, by implementing the embodiments of the disclosure, excessive network bandwidth occupation of another application may be limited when the game application accesses the network, thereby ensuring that the game application may fully use the network bandwidth and enhancing a game experience on the terminal device.

### BRIEF DESCRIPTION OF DRAWINGS

In order to describe the technical solutions in the embodiments of the disclosure more clearly, the drawings required to be used in descriptions about the embodiments will be briefly introduced below. Obviously, the drawings in the following descriptions are only some embodiments of the disclosure. Those of ordinary skilled in the art may further obtain other drawings according to these drawings without creative work.
FIG. 1 illustrates a flowchart of a network bandwidth management method according to a first embodiment of the disclosure.
FIG. 2 illustrates a schematic diagram of network bandwidth allocation according to a second embodiment of the disclosure.
FIG. 3 illustrates a flowchart of another network bandwidth management method according to a third embodiment of the disclosure.
FIG. 4 illustrates another schematic diagram of network bandwidth allocation according to a fourth embodiment of the disclosure.
FIG. 5 illustrates a structure diagram of a terminal device according to a fifth embodiment of the disclosure.
FIG. 6 illustrates a structure diagram of another terminal device according to a sixth embodiment of the disclosure.
FIG. 7 illustrates a structure diagram of a determination unit according to a seventh embodiment of the disclosure.
FIG. 8 illustrates a structure diagram of another terminal device according to an eighth embodiment of the disclosure.
FIG. 9 illustrates a structure diagram of another terminal device according to a ninth embodiment of the disclosure.

### DETAILED DESCRIPTION

In order to make the purpose, technical solutions and advantages of the disclosure clearer, the disclosure will further be described below in combination with the drawings in detail. Obviously, the described embodiments are not all embodiments but only part of embodiments of the disclosure. All other embodiments obtained by those of ordinary skilled in the art on the basis of the embodiments in the disclosure without creative work shall fall within the scope of protection of the disclosure.

Terms "first", "second" and the like in the specification, claims and drawings of the disclosure are adopted not to describe a specific sequence but to distinguish similar objects. In addition, terms "include" and "have" and any transformation of them are intended to cover nonexclusive inclusions. For example, a process, method, system, product or equipment including a series of operations or units is not limited to the operations or units which are listed, but may optionally further include operations or units which are not listed or optionally further include other operations or units intrinsic to the process, the method, the product or the equipment.

A terminal device involved in the embodiments of the disclosure may include various handheld equipment, vehicle-mounted equipment, wearable equipment, computing equipment or other processing equipment connected to a wireless modem, which has a wireless communication function, and User Equipment (UE), Mobile Station (MS), terminal device and the like in various forms. The equipment mentioned above is collectively referred to as terminal device. The embodiments of the disclosure will be introduced below in combination with the drawings.

The embodiments of the disclosure provide a network bandwidth management method and a related product, which may limit excessive network bandwidth occupation of another application when a game application accesses a network, thereby ensuring that the game application may fully use a network bandwidth and enhancing a game experience on a terminal device. Detailed descriptions will be made below respectively.

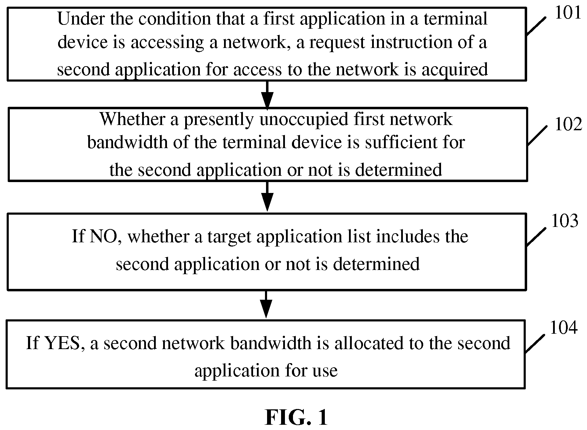

FIG. 1 illustrates a flowchart of a network bandwidth management method according to a first embodiment of the disclosure, wherein the network bandwidth management method illustrated in FIG. 1 may include the following operations.

At block 101, under the condition that a first application in a terminal device is accessing a network, a request instruction of a second application for accessing the network is acquired.

In the embodiment of the disclosure, the first application is a game application. For achieving a better experience when a user plays a game with the terminal device, the game application may preferentially use a network bandwidth of the terminal device, thereby ensuring a smooth network when the game application runs.

For ensuring preferred use and full use of the game application over the network, network bandwidth occupation of another application may be considered to be limited. Therefore, under the condition that the game application is accessing the network, if the second application in the terminal device sends the request instruction for accessing the network to a system, access of the second application to the network may be limited to ensure that the game application may continue using a presently occupied network bandwidth and even occupy a larger network bandwidth when necessary.

In addition, in at least one alternative embodiment, the terminal device may have a network speed protection function to protect full occupation of the game application to the network bandwidth. Therefore, after acquiring the request instruction of the second application for accessing the network, the terminal device determines whether the terminal device enables the network speed protection function at first, and if YES, refuses the request instruction of the second application for accessing the network, that is, the system of the terminal device replies to the second application that the network bandwidth is presently unavailable.

At block 102, whether a presently unoccupied first network bandwidth of the terminal device is sufficient for the second application is determined.

In the embodiment of the disclosure, when the game application accesses the network, the terminal device determines whether a present left network bandwidth (i.e., the first network bandwidth) may meet a using requirement of the second application at first. Specifically, the terminal device parses the request instruction of the second application for accessing the network to acquire a network bandwidth value (i.e., a fifth network bandwidth) requested to be used by the second application, and then compares the first network bandwidth with the fifth network bandwidth to determine whether the first network bandwidth is sufficient for the second application.

Wherein, it is important to note that the request instruction includes the network bandwidth value (i.e., the fifth network bandwidth) requested to be used by the second application and may further include a smallest value (i.e., a second network bandwidth) of a network bandwidth required by the second application. When the terminal device may not allocate the network bandwidth requested to be used to the second application, the smallest value of the required network bandwidth may be allocated to the second application only to maintain the most basic data interaction of the second application.

For example, if the second application is a mailbox application, a 1M bandwidth is requested to be used to receive a new mail notification and download a new mail content; but the terminal device only allocates a 15Kb bandwidth to the second application to receive the new mail notification.

At block 103, if NO, whether a target application list includes the second application is determined.

In the embodiment of the disclosure, if the present left network bandwidth of the terminal device may not meet the using requirement of the second application, whether the target application list includes the second application is determined, wherein the target application list is an application whitelist in the terminal device, including system applications, communication applications frequently used by the user and the like, and the user may automatically set the applications included in the application whitelist according to a requirement. The applications included in the application whitelist may have a right of accessing the network in any time, but the smallest values of network bandwidths occupied by them may not be ensured. That is, the applications in the application whitelist may access the network in any time, but the network bandwidths occupied by them may be relatively smaller.

At block 104, if YES, a second network bandwidth is allocated to the second application for use.

As described at block 102, the second network bandwidth is the smallest value of the network bandwidth required by the second application. In addition, for avoiding reduction in the network bandwidth occupied by the game application which is accessing the network, the second network bandwidth is smaller than the present left network bandwidth (i.e., the first network bandwidth) of the terminal device.

It can be seen that, in the embodiment of the disclosure, the second network bandwidth is allocated to the second application for use when a target application list includes the second application is detected, wherein applications included in the target application list have a right of accessing the network in any time. Therefore, access of the second application to the network is limited to ensure that the game application may continue using a presently occupied network bandwidth, and the basic operation of the second application is ensured, under the condition that the second has a right of accessing the network in any time.

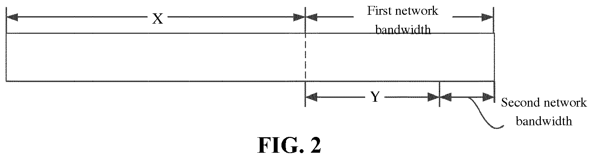

FIG. 2 illustrates a schematic diagram of network bandwidth allocation according to a second embodiment of the disclosure. If applications presently accessing the network only include the first application (i.e., the game application) and the network bandwidth occupied by the first application is X, the presently unoccupied network bandwidth of the terminal device is the first network bandwidth; and if the first network bandwidth may not meet the using requirement of the second application and the second application is an application in the application whitelist, the terminal device allocates the second network bandwidth to the second application for use, the second network bandwidth is the smallest value of the network bandwidth required by the second application and the second network bandwidth is smaller than the first network bandwidth. If a value by which the second network bandwidth is smaller than the first network bandwidth is Y, under the condition that the network bandwidth presently occupied by the first application is X, if a higher network access requirement of the first application is made, a network bandwidth Y may further be occupied by the first application, so that the network access requirement of the game application is fully met, and the game experience on the terminal device is improved.

Furthermore, the network bandwidth Y may be obtained after a game process is analyzed and a magnitude of the network bandwidth occupied by the game application within a subsequent period of time is predicted by virtue of big data, so that a larger available network bandwidth may be prepared for the game application according to a prediction result.

On the other aspect, if the target application list does not include the second application, the system of the terminal device may refuse the request instruction of the second application for accessing the network, that is, the system of the terminal device replies to the second application that the network bandwidth is presently unavailable.

It can be seen that, by virtue of the method described in FIG. 1, excessive network bandwidth occupation of another application is limited when the game application accesses the network, thereby ensuring that the game application may fully use the network bandwidth and enhancing the game experience on the terminal device.

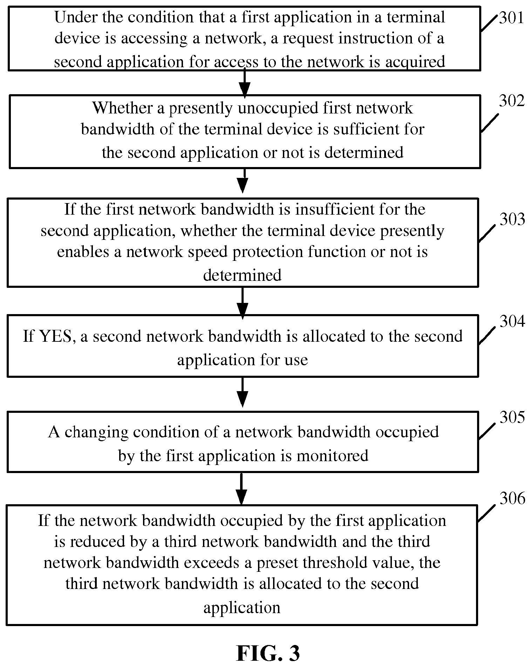

FIG. 3 illustrates a flowchart of another network bandwidth management method according to a third embodiment of the disclosure. As illustrated in FIG. 3, the method may include the following operations.

At block 301, under the condition that a first application in a terminal device is accessing a network, a request instruction of a second application for accessing the network is acquired.

In the embodiment of the disclosure, the first application is a game application. For achieving a better experience when a user plays a game with the terminal device, the game application may preferentially use a network bandwidth of the terminal device, thereby ensuring a smooth network when the game application runs.

For ensuring preferred use and full use of the game application over the network, network bandwidth occupation of another application may be considered to be limited. Therefore, under the condition that the game application is accessing the network, if the second application in the terminal device sends the request instruction for accessing the network to a system, access of the second application to the network may be limited to ensure that the game application may continue using a presently occupied network bandwidth and even occupy a larger network bandwidth when necessary.

At block 302, whether a presently unoccupied first network bandwidth of the terminal device is sufficient for the second application is determined.

In the embodiment of the disclosure, when the game application accesses the network, the terminal device determines whether a present left network bandwidth (i.e., the first network bandwidth) may meet a using requirement of the second application at first. Specifically, the terminal device parses the request instruction of the second application for accessing the network to acquire a network bandwidth value (i.e., a fifth network bandwidth) requested to be used by the second application, and then compares the first network bandwidth with the fifth network bandwidth to determine whether the first network bandwidth is sufficient for the second application.

Wherein, it is important to note that the request instruction includes the network bandwidth value (i.e., the fifth network bandwidth) requested to be used by the second application and may further include a smallest value (i.e., a second network bandwidth) of a network bandwidth required by the second application. When the terminal device may not allocate the network bandwidth requested to be used to the second application, the smallest value of the required network bandwidth may be allocated to the second application only to maintain the most basic data interaction of the second application.

For example, if the second application is a mailbox application, a 1M bandwidth is requested to be used to receive a new mail notification and download a new mail content; and the terminal device only allocates a 15Kb bandwidth to the second application to receive the new mail notification.

At block 303, if the first network bandwidth is insufficient for the second application, whether the terminal device presently enables a network speed protection function is determined.

In at least one alternative embodiment, the terminal device may have the network speed protection function to protect full occupation of the game application to the network bandwidth. Therefore, after acquiring the request instruction of the second application for accessing the network, the terminal device determines whether the terminal device enables the network speed protection function at first, and if YES, limits network bandwidth occupation of the second application.

At block 304, if YES, a second network bandwidth is allocated to the second application for use.

As described at block 302, the second network bandwidth is the smallest value of the network bandwidth required by the second application. In addition, for avoiding reduction in the network bandwidth occupied by the game application which is accessing the network, the second network bandwidth is smaller than the present left network bandwidth (i.e., the first network bandwidth) of the terminal device.

In addition, a target application list may further be preset in the terminal device, and the target application list is an application whitelist in the terminal device, including system applications, communication applications frequently used by the user and the like, and the user may automatically set the applications included in the application whitelist according to a requirement. The applications included in the application whitelist may have a right of accessing the network in any time, but smallest values of network bandwidths occupied by them may not be ensured. That is, the applications in the application whitelist may access the network in any time, but the network bandwidths occupied by them may be relatively smaller.

When the target application list includes the second application, the terminal device may allocate the second network bandwidth to the second application for use; and if the target application list does not include the second application, the system of the terminal device may refuse the request instruction of the second application for accessing the network, that is, the system of the terminal device replies to the second application that the network bandwidth is presently unavailable.

At block 305, a changing condition of a network bandwidth occupied by the first application is monitored.

Furthermore, after the second network bandwidth is allocated to the second application to maintain the most basic data interaction of the second application, the changing condition of the network bandwidth occupied by the first application may be monitored in real time; and if the network bandwidth occupied by the first application is reduced more, a network bandwidth (i.e., a third network bandwidth) released by the first application may be allocated to the second application for use, thereby enabling the second application to realize more network interaction functions.

At block 306, if the network bandwidth occupied by the first application is reduced by a third network bandwidth and the third network bandwidth exceeds a preset threshold value, the third network bandwidth is allocated to the second application.

In addition, in at least one alternative embodiment, if the first application runs in background and there is another application accessing the network in background, network access of the background application may be suspended to release a larger network bandwidth for the second application to use.

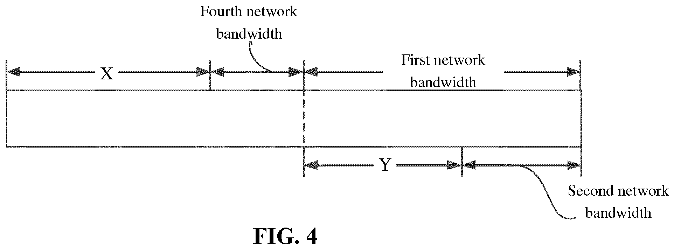

FIG. 4 illustrates another schematic diagram of network bandwidth allocation according to a fourth embodiment of the disclosure. If the first application (the game application) runs in foreground at present, the network bandwidth occupied by the first application is X, a third application runs in background and a network bandwidth occupied by the third application is a fourth network bandwidth, a left available network bandwidth of the terminal device is the first network bandwidth, then the terminal device allocates the second network bandwidth to the second application, and the second network bandwidth may support basic data interaction of the second application only; and after the second network bandwidth is allocated to the second application, the left available network bandwidth of the terminal device is Y. Y may be provided for the first application to use when the network bandwidth required by the first application is increased. Then, the terminal device may suspend network access of the third application running in background and allocate the fourth network bandwidth to the second application for use.

In at least one alternative embodiment, if the first application makes a higher network bandwidth using requirement, the fourth network bandwidth may be reallocated to the first application for use to meet the network access requirement of the game application as much as possible and improve fluency of the game.

It can be seen that, by virtue of the method described in FIG. 3, excessive network bandwidth occupation of another application is limited when the game application accesses the network, thereby ensuring that the game application may fully use the network bandwidth and enhancing the game experience on the terminal device.

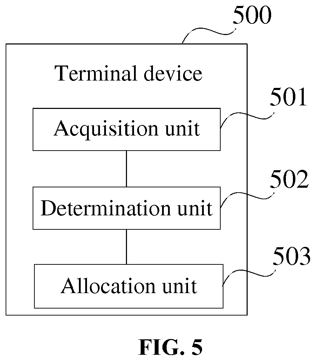

FIG. 5 illustrates a structure diagram of a terminal device according to a fifth embodiment of the disclosure. As illustrated in FIG. 5, the terminal device 500 may include an acquisition unit 501, a determination unit 502 and an allocation unit 503, wherein the acquisition unit 501 is configured to, under the condition that a first application in the terminal device is accessing a network, acquire a request instruction of a second application for accessing the network, wherein the first application is a game application. The determination unit 502 is configured to determine whether a presently unoccupied first network bandwidth of the terminal device is sufficient for the second application. The determination unit 502 is further configured to, under the condition that the first network bandwidth is insufficient for the second application, determine whether a target application list includes the second application. The allocation unit 503 is configured to, under the condition that the target application list includes the second application, allocate a second network bandwidth to the second application for use, wherein the second network bandwidth is a smallest value of a network bandwidth required by the second application, and the second network bandwidth is smaller than the first network bandwidth.

In the embodiment of the disclosure, the first application is a game application. For achieving a better experience when a user plays a game with the terminal device, the game application may preferentially use a network bandwidth of the terminal device, thereby ensuring a smooth network when the game application runs.

For ensuring preferred use and full use of the game application over the network, network bandwidth occupation of another application may be considered to be limited. Therefore, under the condition that the game application is accessing the network, if the acquisition unit 501 acquires the request instruction, sent by the second application in the terminal device to a system, for accessing the network, access of the second application to the network may be limited through the allocation unit 503 to ensure that the game application may continue using a presently occupied network bandwidth and even occupy a larger network bandwidth when necessary.

In the embodiment of the disclosure, when the game application accesses the network, the determination unit 502 determines whether a present left network bandwidth (i.e., the first network bandwidth) may meet a using requirement of the second application. Specifically, the determination unit 502 parses the request instruction of the second application for accessing the network to acquire a network bandwidth value (i.e., a fifth network bandwidth) requested to be used by the second application, and then compares the first network bandwidth with the fifth network bandwidth to determine whether the first network bandwidth is sufficient for the second application.

Wherein, it is important to note that the request instruction includes the network bandwidth value (i.e., the fifth network bandwidth) requested to be used by the second application and may further include the smallest value (i.e., the second network bandwidth) of the network bandwidth required by the second application. When the terminal device may not allocate the network bandwidth requested to be used to the second application, the allocation unit 503 may only allocate the smallest value of the required network bandwidth to the second application to maintain the most basic data interaction of the second application.

In the embodiment of the disclosure, if the present left network bandwidth of the terminal device may not meet the using requirement of the second application, the determination unit 502 determines whether the target application list includes the second application, wherein the target application list is an application whitelist in the terminal device, including system applications, communication applications frequently used by the user and the like, and the user may automatically set the applications included in the application whitelist according to a requirement. The applications included in the application whitelist may have a right of accessing the network in any time, but the smallest values of network bandwidths occupied by them may not be ensured. That is, the applications in the application whitelist may access the network in any time, but the network bandwidths occupied by them may be relatively smaller.

As described above, the second network bandwidth is the smallest value of the network bandwidth required by the second application. In addition, for avoiding reduction in the network bandwidth occupied by the game application which is accessing the network, the second network bandwidth is smaller than the present left network bandwidth (i.e., the first network bandwidth) of the terminal device.

It can be seen that the terminal device described in FIG. 5 may limit excessive network bandwidth occupation of another application when the game application accesses the network, thereby ensuring that the game application may fully use the network bandwidth and enhancing the game experience on the terminal device.

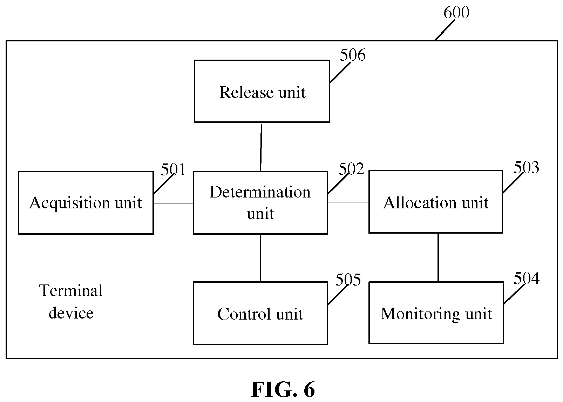

FIG. 6 illustrates a structure diagram of another terminal device 600 according to a sixth embodiment of the disclosure, wherein the terminal device illustrated in FIG. 6 is obtained on the basis of the terminal device illustrated in FIG. 5, and compared with the terminal device illustrated in FIG. 5, the terminal device illustrated in FIG. 6 further includes a monitoring unit 504, a control unit 505 and a release unit 506, wherein in an implementation mode, the monitoring unit 504 is configured to monitor a changing condition of a network bandwidth occupied by the first application. The allocation unit 503 is further configured to, under the condition that the network bandwidth occupied by the first application is reduced by a third network bandwidth and the third network bandwidth exceeds a preset threshold value, allocate the third network bandwidth to the second application.

In the implementation mode, after the second network bandwidth is allocated to the second application to maintain the most basic data interaction of the second application, the changing condition of the network bandwidth occupied by the first application may be monitored in real time; and if the network bandwidth occupied by the first application is reduced more, the network bandwidth (i.e., the third network bandwidth) released by the first application may be allocated to the second application for use, thereby enabling the second application to realize more network interaction functions.

In an implementation mode, the control unit 505 is configured to, under the condition that the target application list does not include the second application, refuse the request instruction of the second application for accessing the network.

In the implementation mode, the target application list is the application whitelist in the terminal device, including the system applications, the communication applications frequently used by the user and the like, and the user may automatically set the applications included in the application whitelist according to the requirement. The applications included in the application whitelist may have the right of accessing the network in any time, but the smallest values of the network bandwidths occupied by them may not be ensured. That is, the applications in the application whitelist may access the network in any time, but the network bandwidths occupied by them may be relatively smaller.

In an implementation mode, the first application runs in foreground. Under this condition, the acquisition unit 501 is further configured to, under the condition that the target application list includes the second application, acquire a third application accessing the network in background. The release unit 506 is configured to, under the condition that the target application list does not include the third application, suspend network access of the third application to release a fourth network bandwidth. The allocation unit 503 is further configured to allocate the fourth network bandwidth to the second application.

In the implementation mode, if the first application runs in foreground and there is another application accessing the network in background, network access of the background application may be suspended to release a larger network bandwidth for the second application to use.

In an implementation mode, the determination unit 502 is further configured to determine whether the terminal device presently enables a network speed protection function, wherein the network speed protection function is configured to ensure a sufficient network bandwidth for the game application. The control unit 505 is further configured to, under the condition that the terminal device presently enables the network speed protection function, refuse the request instruction of the second application for accessing the network.

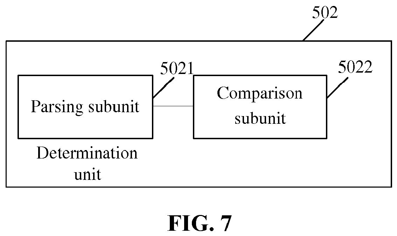

In an implementation mode, the determination unit 502 includes a parsing subunit 5021 and a comparison subunit 5022. FIG. 7 illustrates a structure diagram of a determination unit 502 according to a seventh embodiment of the disclosure, wherein the parsing subunit 5021 is configured to parse the request instruction of the second application for accessing the network to acquire a fifth network bandwidth requested by the second application. The comparison subunit 5022 is configured to compare the first network bandwidth with the fifth network bandwidth to determine whether the first network bandwidth is sufficient for the second application.

It can be seen that the terminal device described in FIG. 6 may limit excessive network bandwidth occupation of another application when the game application accesses the network, thereby ensuring that the game application may fully use the network bandwidth and enhancing the game experience on the terminal device.

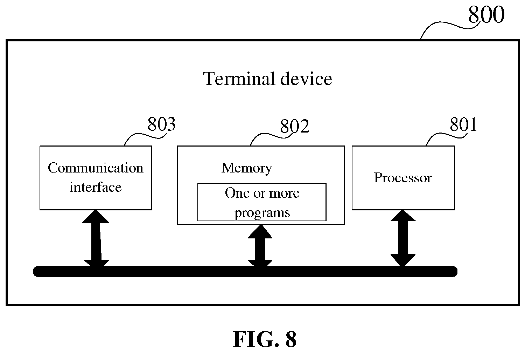

FIG. 8 illustrates a structure diagram of another terminal device according to an eighth embodiment of the disclosure. As illustrated in the figure, the terminal device 800 includes a processor 801, a memory 802, a communication interface 803 and one or more programs, wherein the one or more programs are stored in the memory and configured to be executed by the processor, and the programs include instructions configured to execute the operations in the method embodiment.

For example, the programs include instructions configured to execute the operations of under the condition that a first application in the terminal device is accessing a network, acquiring a request instruction of a second application for accessing the network, wherein the first application is a game application; determining whether a presently unoccupied first network bandwidth of the terminal device is sufficient for the second application; if NO, determining whether a target application list includes the second application; and if YES, allocating a second network bandwidth to the second application for use, wherein the second network bandwidth is a smallest value of a network bandwidth required by the second application, and the second network bandwidth is smaller than the first network bandwidth.

In at least one example, the programs further include instructions configured to execute the operations of monitoring a changing condition of a network bandwidth occupied by the first application; and if the network bandwidth occupied by the first application is reduced by a third network bandwidth and the third network bandwidth exceeds a preset threshold value, allocating the third network bandwidth to the second application.

In at least one example, the programs further include an instruction configured to execute the following operation: under the condition that the first application runs in foreground, if the target application list does not include the second application, refusing the request instruction of the second application for accessing the network.

In at least one example, the programs further include instructions configured to execute the operations of under the condition that the target application list includes the second application, acquiring a third application accessing the network in background; under the condition that the target application list does not include the third application, suspending network access of the third application to release a fourth network bandwidth; and allocating the fourth network bandwidth to the second application.

In at least one example, the programs further include instructions configured to execute the operations of after the request instruction of the second application for accessing the network, determining whether the terminal device presently enables a network speed protection function, wherein the network speed protection function is configured to ensure a sufficient network bandwidth for the game application; and if YES, refusing the request instruction of the second application for accessing the network.

In at least one example, on the aspect of determining whether the presently unoccupied first network bandwidth of the terminal device is sufficient for the second application, the programs specifically include instructions configured to execute the operations of parsing the request instruction of the second application for accessing the network to acquire a fifth network bandwidth requested by the second application; and comparing the first network bandwidth with the fifth network bandwidth to determine whether the first network bandwidth is sufficient for the second application.

It can be seen that the terminal device described in FIG. 8 may limit excessive network bandwidth occupation of another application when the game application accesses the network, thereby ensuring that the game application may fully use the network bandwidth and enhancing a game experience on the terminal device.

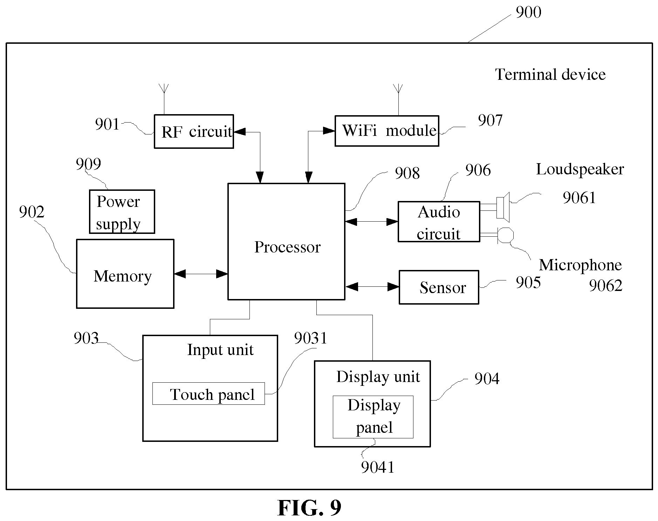

FIG. 9 illustrates a structure diagram of a terminal device 900 according to a ninth embodiment of the disclosure. As illustrated in FIG. 9, for convenient description, only parts related to the embodiment of the disclosure are illustrated, and specific technical details which are undisclosed refer to parts of the method of the embodiments of the disclosure. A terminal may be any terminal device including a mobile phone, a tablet computer, a Personal Digital Assistant (PDA), a Point of Sales (POS), a vehicle-mounted computer and the like. For example, the terminal device is a mobile phone.

FIG. 9 illustrates a block diagram of part of a structure of a mobile phone related to a terminal device according to an embodiment of the disclosure. The mobile phone includes components such as a Radio Frequency (RF) circuit 901, a memory 902, an input unit 903, a display unit 904, a sensor 905, an audio circuit 906, a Wireless Fidelity (WiFi) module 907, a processor 908 and a power supply 990. Those skilled in the art should know that the structure of the mobile phone illustrated in FIG. 9 is not intended to limit the mobile phone and may include components more or fewer than those illustrated in the figure or some components are combined or different component arrangements are adopted.

Each component of the mobile phone will be specifically introduced below in combination with FIG. 9.

The RF circuit 901 may be configured to receive and send signals in an information receiving and sending or communication process, particularly after receiving downlink information of a base station, send it to the processor 908 for processing and, in addition, send designed uplink data to the base station. The RF circuit 901 usually includes, but not limited to, an antenna, at least one amplifier, a transceiver, a coupler, a Low Noise Amplifier (LNA), a duplexer and the like. In addition, the RF circuit 901 may also communicate with a network and other equipment in a wireless communication manner. Any communication standard or protocol may be used for wireless communication, including, but not limited to, a Global System of Mobile communication (GSM), General Packet Radio Service (GPRS), Code Division Multiple Access (CDMA), Wideband Code Division Multiple Access (WCDMA), Long Term Evolution (LTE), an electronic mail, Short Messaging Service (SMS) and the like.

The memory 902 may be configured to store a software program and a module, and the processor 908 operates the software program and module stored in the memory 902, thereby executing various function applications and data processing of the mobile phone. The memory 902 may mainly include a program storage region and a data storage region, wherein the program storage region may store an operating system, an application program required by at least one function (for example, a sound playing function and an image playing function) and the like, and the data storage region may store data (for example, audio data and a phonebook) created according to use of the mobile phone and the like. In addition, the memory 902 may include a high-speed Random Access Memory (RAM), and may further include a non-volatile memory, for example, at least one disk storage device, flash memory device or other volatile solid-state storage device.

The input unit 903 may be configured to receive input digital or character information and generate key signal input related to user setting and function control of the mobile phone. Specifically, the input unit 903 may include a touch panel 9031. The touch panel 9031, also called as a touch screen, may collect a touch operation (for example, operation executed by a user with any proper object or accessory such as a finger and a stylus on the touch panel 9031 or nearby the touch panel 9031) of the user thereon or nearby and drive a corresponding connection device according to a preset program. Optionally, the touch panel 9031 may include two parts, i.e., a touch detection device and a touch controller, wherein the touch detection device detects a touch orientation of the user, detects a signal generated by a touch operation and sends the signal to the touch controller; and the touch controller receives touch information from the touch detection device and converts it into a contact coordinate for sending to the processor 908, and may receive and execute a command sent by the processor 908. In addition, the touch panel 9031 may be implemented into multiple types such as a resistance type, a capacitance type, an infrared type and a surface acoustic wave type.

The display unit 904 may be configured to display information input by the user or information provided for the user and various menus of the mobile phone. The display unit 904 may include a display panel. Optionally, the display panel 9041 may be configured in form of a Liquid Crystal Display (LCD), an Organic Light-Emitting Diode (OLED) and the like. Furthermore, the touch panel 9031 may cover the display panel 9041, the touch panel 9031, after detecting the touch operation executed thereon or nearby, transmits it to the processor 908 to determine a type of a touch event, and the processor 908 subsequently provides corresponding visual output on the display panel 9041 according to the type of the touch event. Although the touch panel 9031 and display panel 9041 in FIG. 9 realize input and output functions of the mobile phone as two independent components, the touch panel 9031 and the display panel 9041 may be integrated to realize the input and output functions of the mobile phone in some embodiments.

The mobile phone may further include at least one sensor 905, for example, a light sensor, a motion sensor and another sensor. Specifically, the light sensor may include an environmental light sensor and a proximity sensor, wherein the environmental light sensor may regulate brightness of the display panel 9041 according to brightness of environmental light, and the proximity sensor may turn off the display panel 9041 and/or backlight when the mobile phone is moved to an ear. As a motion sensor, an accelerometer sensor may detect a magnitude of an acceleration in each direction (usually three axes), may detect a magnitude and direction of the gravity under a motionless condition, and may be configured for an application recognizing a posture of the mobile phone (for example, landscape and portrait switching, a related game and magnetometer posture calibration), a vibration recognition related function and the like (for example, a pedometer and knocking). Other sensors, for example, a gyroscope, a barometer, a hygrometer, a thermometer and an infrared sensor, which may be configured in the mobile phone will not be elaborated herein.

The audio circuit 906, a loudspeaker 761 and a microphone 762 may provide an audio interface between the user and the mobile phone. The audio circuit 906 may transmit an electric signal converted from received audio data to the loudspeaker 761, and then the loudspeaker 761 converts it into a sound signal for output. On the other aspect, the microphone 762 converts a collected sound signal into an electric signal, and then the audio circuit 906 receives and converts it into audio data and outputs the audio data to the processor 908 for processing and sending to, for example, another mobile phone through the RF circuit 901 or outputs the audio data to the memory 902 for further processing.

WiFi is a short-distance wireless communication technology. The mobile phone may help the user to receive and send an electronic mail, browse a webpage, access streaming media and the like through the WiFi module 907, and provides wireless broadband Internet access for the user.

The processor 908 is a control center of the mobile phone, connects each part of the whole mobile phone by virtue of various interfaces and lines and executes various functions and data processing of the mobile phone by operating or executing the software program and/or module stored in the memory 902 and calling data stored in the memory 902, thereby monitoring the whole mobile phone. Optionally, the processor 908 may include one or more processing units. Preferably, the processor 908 may integrate an application processor and a modulation and demodulation processor, wherein the application processor mainly processes the operating system, a UI, an application program and the like, and the modulation and demodulation processor mainly processes wireless communication. It can be understood that the modulation and demodulation processor may also not be integrated into the processor 908.

The mobile phone further includes a power supply 909 (for example, a battery) supplying power to each component. Preferably, the power supply may be logically connected with the processor 908 through a power management system, thereby realizing functions of charging and discharging management, power consumption management and the like through the power management system.

Although not illustrated in the figure, the mobile phone may further include a camera, a Bluetooth module and the like, which will not be elaborated herein.

In the embodiment illustrated in FIG. 1 or FIG. 3, each operation of the method flow may be implemented on the basis of the structure of the mobile phone.

In the embodiments illustrated in FIG. 5 to FIG. 7, the function of each unit may be realized on the basis of the structure of the mobile phone.

For example, the processor 908 may call the computer program stored in the memory 902 to execute the following operations.

Detecting that a first application in the terminal device is accessing a network, acquiring a request instruction of a second application for accessing the network, wherein the first application is a game application; detecting whether a presently unoccupied first network bandwidth of the terminal device is sufficient for the second application; when the presently unoccupied first network bandwidth of the terminal device is insufficient for the second application, allocating a second network bandwidth to the second application for use, wherein the second network bandwidth is a smallest network bandwidth required by the second application, and the second network bandwidth is smaller than the first network bandwidth.

In at least one alternative embodiment, the operations further comprises monitoring a changing condition of a network bandwidth occupied by the first application; and when the network bandwidth occupied by the first application is reduced by a third network bandwidth and the third network bandwidth exceeds a preset threshold value, allocating the third network bandwidth to the second application.

In at least one alternative embodiment, the operations further comprising: detecting whether a target application list comprises the second application,

In at least one alternative embodiment, the operations further comprising: when the target application list does not comprise the second application, refusing the request of the second application for accessing the network.

In at least one alternative embodiment, wherein the first application runs in foreground, and the operations further comprises: under the condition that the target application list comprises the second application, acquiring a third application accessing the network in background; under the condition that the target application list does not comprise the third application, suspending network access of the third application to release a fourth network bandwidth; and allocating the fourth network bandwidth to the second application.

In at least one alternative embodiment, after acquiring the request of the second application for accessing the network, the operations further comprising: determining whether the terminal device presently enables a network speed protection function, wherein the network speed protection function is configured to ensure a sufficient network bandwidth for the game application; and when the network speed protection function is enabled, refusing the request of the second application for accessing the network.

In at least one alternative embodiment, wherein determining whether the presently unoccupied first network bandwidth of the terminal device is sufficient for the second application comprises: parsing the request of the second application for accessing the network to acquire a fifth network bandwidth requested by the second application; and comparing the first network bandwidth with the fifth network bandwidth to determine whether the first network bandwidth is sufficient for the second application.

In at least one alternative embodiment, wherein applications included in the target application list have a right of accessing the network in any time.

In at least one alternative embodiment, wherein when the first application requires more network bandwidth, allocating a sixth network bandwidth to the first application, wherein the sixth network bandwidth is a value by which the second network bandwidth is smaller than the first network bandwidth.

In at least one alternative embodiment, wherein when the first application requires more network bandwidth, reallocating the fourth network bandwidth to the first application for use.

It can be seen that the terminal device described in FIG. 9 may limit excessive network bandwidth occupation of another application when the game application accesses the network, thereby ensuring that the game application may fully use the network bandwidth and enhancing a game experience on the terminal device.

An embodiment of the disclosure further provides a computer storage medium, which stores a computer program configured for electronic data switching, wherein the computer program causes a computer to execute part or all of the operations of any method recorded in the method embodiment, and the computer includes a terminal device.

It is important to note that, for simple description, each method embodiment is expressed into a combination of a series of actions. However, those skilled in the art should know that the disclosure is not limited by an action sequence described herein because some operations may be executed in another sequence or at the same time according to the disclosure. Second, those skilled in the art should also know that the embodiments described in the specification all belong to preferred embodiments and involved actions and modules are not always necessary to the disclosure.

Each embodiment in the abovementioned embodiments is described with different emphases, and undetailed parts in a certain embodiment may refer to related descriptions in the other embodiments.

In some embodiments provided by the application, it should be understood that the disclosed device may be implemented in another manner. For example, the device embodiment described above is only schematic, and for example, division of the units is only logical function division, and other division manners may be adopted during practical implementation. For example, multiple units or components may be combined or integrated into another system, or some characteristics may be neglected executed. In addition, coupling or direct coupling or communication connection between each displayed or discussed component may be indirect coupling or communication connection, implemented through some interfaces, of the device or the units, and may be electrical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each functional unit in each embodiment of the disclosure may be integrated into a processing unit, each unit may also physically exist independently, and two or more than two units may also be integrated into a unit. The integrated unit may be implemented in a hardware form and may also be implemented in form of software functional unit.

When being implemented in form of software functional unit and sold or used as an independent product, the integrated unit may be stored in a computer-readable memory. Based on such an understanding, the technical solutions of the disclosure substantially or parts making contributions to the conventional art or all or part of the technical solutions may be embodied in form of software product, and the computer software product is stored in a memory, including a plurality of instructions configured to enable a piece of computer equipment (which may be a personal computer, a server, network equipment or the like) to execute all or part of the operations of the method in each embodiment of the disclosure. The memory includes: various media capable of storing program codes such as a U disk, a Read-Only Memory (ROM), a RAM, a mobile hard disk, a magnetic disk or an optical disk.

Those of ordinary skilled in the art can understand that all or part of the operations in various methods of the embodiments may be completed by related hardware instructed by a program, the program may be stored in a computer-readable memory, and the memory may include a flash disk, a ROM, a RAM, a magnetic disk, an optical disk or the like.

The embodiments of the disclosure are introduced above in detail, the principle and implementation modes of the disclosure are elaborated with specific examples in the disclosure, and the descriptions made to the embodiments are only adopted to help the method of the disclosure and the core concept thereof to be understood. In addition, those of ordinary skilled in the art may make variations to the specific implementation modes and the application scope according to the concept of the disclosure. From the above, the contents of the specification should not be understood as limits to the disclosure.

## Claims

1. A network bandwidth management method, performed by a terminal device, comprising:
detecting that a first application in the terminal device is accessing a network;
**characterized by**,
acquiring a request of a second application for accessing the network, wherein the first application is a game application (101), the request comprises a second network bandwidth and a network bandwidth requested by the second application, and the second network bandwidth is a smallest network bandwidth required by the second application;
parsing the request of the second application for accessing the network to acquire a network bandwidth requested by the second application;
comparing a presently unoccupied first network bandwidth of the terminal device with the network bandwidth requested by the second application to determine whether the first network bandwidth is sufficient for the second application;
when the first network bandwidth is insufficient for the second application, detecting whether a target application list comprises the second application;
when the target application list comprises the second application, allocating the second network bandwidth to the second application for use, wherein the second network bandwidth is smaller than the first network bandwidth (104).

2. The method according to claim 1, further comprising:
monitoring a changing condition of a network bandwidth occupied by the first application (305); and
when the network bandwidth occupied by the first application is reduced by a third network bandwidth and the third network bandwidth exceeds a preset threshold value, allocating the third network bandwidth to the second application (306).

3. The method according to claim 1, further comprising:
when the target application list does not comprise the second application, refusing the request of the second application for accessing the network.

4. The method according to claim 3, wherein the first application runs in foreground, and
wherein the method further comprises:
under the condition that a target application list comprises the second application, acquiring a third application accessing the network in background;
under the condition that the target application list does not comprise the third application, suspending network access of the third application to release a fourth network bandwidth; and
allocating the fourth network bandwidth to the second application.

5. The method according to any one of claims 1-4, after acquiring the request of the second application for accessing the network, further comprising:
detecting whether the terminal device enables a network speed protection function, wherein the network speed protection function is configured to ensure a sufficient network bandwidth for the game application; and
when the network speed protection function is enabled, refusing the request of the second application for accessing the network.

6. A terminal device (500), **characterized by**, comprising:
an acquisition unit (501), configured to, detect that a first application in the terminal device is accessing a network, acquire a request of a second application for access to the network, wherein the first application is a game application, the request comprises a second network bandwidth and a network bandwidth requested by the second application, and the second network bandwidth is a smallest network bandwidth required by the second application;
a determination unit (502), configured to detect whether a presently unoccupied first network bandwidth of the terminal device is sufficient for the second application;
the determination unit (502) is further configured to, when the first network bandwidth is insufficient for the second application, detect whether a target application list comprises the second application; and
an allocation unit (503), configured to, when the target application list comprises the second application, allocate the second network bandwidth to the second application for use, wherein the second network bandwidth is smaller than the first network bandwidth;
wherein the determination unit (502) comprises:
a parsing subunit (5021), configured to parse the request of the second application for access to the network to acquire a network bandwidth requested by the second application; and
a comparison subunit (5022), configured to compare the first network bandwidth with the network bandwidth requested by the second application to determine whether the first network bandwidth is sufficient for the second application or not.

7. The terminal device (500) according to claim 6, further comprising:
a monitoring unit (504), configured to monitor a changing condition of a network bandwidth occupied by the first application, wherein
the allocation unit (503) is further configured to, when the network bandwidth occupied by the first application is reduced by a third network bandwidth and the third network bandwidth exceeds a preset threshold value, allocate the third network bandwidth to the second application.

8. The terminal device (500) according to claim 7, further comprising:
a control unit (505), configured to, when the target application list does not comprise the second application, refuse the request of the second application for access to the network.

9. The terminal device (500) according to claim 8, wherein the first application runs in foreground;
the acquisition unit (501) is further configured to, when the target application list comprises the second application, acquire a third application accessing the network in background;
the terminal device (500) further comprises:
a release unit (506), configured to, under the condition that the target application list does not comprise the third application, suspend network access of the third application to release a fourth network bandwidth; and
the allocation unit (503) is further configured to allocate the fourth network bandwidth to the second application.

10. The terminal device (500) according to any one of claims 6-9, wherein
the determination unit (502) is further configured to detect whether the terminal device presently enables a network speed protection function, wherein the network speed protection function is configured to ensure a sufficient network bandwidth for the game application; and
the control unit (505) is further configured to, when the terminal device enables the network speed protection function, refuse the request of the second application for access to the network.

11. A computer-readable storage medium, storing a computer program configured for electronic data switching, wherein the computer program comprises instructions to cause the terminal device of claim 6 to execute the steps of the method according to any one of claims 1-5.

## Patentansprüche

1. Netzwerkbandbreitenverwaltungsverfahren, durchgeführt durch eine Endgerätevorrichtung, umfassend:
Detektieren, dass eine erste Anwendung in der Endgerätevorrichtung auf ein Netzwerk zugreift;
**gekennzeichnet durch**,
Erfassen einer Anforderung einer zweiten Anwendung für den Zugriff auf das Netzwerk, wobei die erste Anwendung eine Spielanwendung (101) ist, die Anforderung eine zweite Netzwerkbandbreite und eine von der zweiten Anwendung angeforderte Netzwerkbandbreite umfasst, und die zweite Netzwerkbandbreite eine kleinste von der zweiten Anwendung benötigte Netzwerkbandbreite ist;
Parsen der Anforderung der zweiten Anwendung für den Zugriff auf das Netzwerk, um eine von der zweiten Anwendung angeforderte Netzwerkbandbreite zu erfassen;
Vergleichen einer gegenwärtig nicht belegten ersten Netzwerkbandbreite der Endgerätevorrichtung mit der durch die zweite Anwendung angeforderten Netzwerkbandbreite, um zu bestimmen, ob die erste Netzwerkbandbreite für die zweite Anwendung ausreicht;
wenn die erste Netzwerkbandbreite für die zweite Anwendung nicht ausreicht, detektieren, ob eine Zielanwendungsliste die zweite Anwendung umfasst;
wenn die Zielanwendungsliste die zweite Anwendung umfasst, Zuweisen der zweiten Netzwerkbandbreite zur Verwendung an die zweite Anwendung, wobei die zweite Netzwerkbandbreite kleiner ist als die erste Netzwerkbandbreite (104).

2. Verfahren nach Anspruch 1, ferner umfassend:
Überwachen eines sich verändernden Zustands einer von der ersten Anwendung belegten Netzwerkbandbreite (305); und
wenn die von der ersten Anwendung belegte Netzwerkbandbreite um eine dritte Netzwerkbandbreite reduziert wird und die dritte Netzwerkbandbreite einen voreingestellten Schwellenwert überschreitet, Zuweisen der dritten Netzwerkbandbreite an die zweite Anwendung (306) .

3. Verfahren nach Anspruch 1, ferner umfassend:
wenn die Zielanwendungsliste die zweite Anwendung nicht umfasst, Ablehnen der Anforderung der zweiten Anwendung für den Zugriff auf das Netzwerk.

4. Verfahren nach Anspruch 3, wobei die erste Anwendung im Vordergrund läuft, und
wobei das Verfahren ferner umfasst:
unter der Bedingung, dass eine Zielanwendungsliste die zweite Anwendung umfasst, Erfassen einer dritten Anwendung, die auf das Netzwerk im Hintergrund zugreift;
unter der Bedingung, dass die Zielanwendungsliste die dritte Anwendung nicht umfasst, Aussetzen des Netzwerkzugriffs der dritten Anwendung, um eine vierte Netzwerkbandbreite freizugeben; und
Zuweisen der vierten Netzwerkbandbreite an die zweite Anwendung.

5. Verfahren nach einem der Ansprüche 1-4, das nach dem Erfassen der Anforderung der zweiten Anwendung zum Zugriff auf das Netzwerk ferner umfasst:
Detektieren, ob die Endgerätevorrichtung eine Netzwerkgeschwindigkeits-Schutzfunktion aktiviert, wobei die Netzwerkgeschwindigkeits-Schutzfunktion dazu konfiguriert ist, eine ausreichende Netzwerkbandbreite für die Spielanwendung sicherzustellen; und
wenn die Netzwerkgeschwindigkeits-Schutzfunktion aktiviert ist, Ablehnen der Anforderung der zweiten Anwendung zum Zugriff auf das Netzwerk.

6. Endgerätevorrichtung (500), **dadurch gekennzeichnet, dass** sie umfasst:
eine Erfassungseinheit (501), die dazu konfiguriert ist, zu detektieren, dass eine erste Anwendung in der Endgerätevorrichtung auf ein Netzwerk zugreift, eine Anforderung einer zweiten Anwendung für den Zugriff auf das Netzwerk zu erfassen, wobei die erste Anwendung eine Spielanwendung ist, die Anforderung eine zweite Netzwerkbandbreite und eine von der zweiten Anwendung angeforderte Netzwerkbandbreite umfasst, und die zweite Netzwerkbandbreite eine kleinste von der zweiten Anwendung benötigte Netzwerkbandbreite ist;
eine Bestimmungseinheit (502), die dazu konfiguriert ist, zu detektieren, ob eine gegenwärtig nicht belegte erste Netzwerkbandbreite der Endgerätevorrichtung für die zweite Anwendung ausreicht;
die Bestimmungseinheit (502) ferner dazu konfiguriert ist, zu detektieren, ob eine Zielanwendungsliste die zweite Anwendung umfasst, wenn die erste Netzwerkbandbreite für die zweite Anwendung nicht ausreicht; und
eine Zuweisungseinheit (503), die dazu konfiguriert ist, wenn die Zielanwendungsliste die zweite Anwendung umfasst, die zweite Netzwerkbandbreite der zweiten Anwendung zur Verwendung zuzuweisen, wobei die zweite Netzwerkbandbreite kleiner als die erste Netzwerkbandbreite ist;
wobei die Bestimmungseinheit (502) umfasst:
eine Parsing-Untereinheit (5021), die dazu konfiguriert ist, die Anforderung der zweiten Anwendung für den Zugriff auf das Netzwerk zu parsen, um eine von der zweiten Anwendung angeforderte Netzwerkbandbreite zu erfassen; und
eine Vergleichsuntereinheit (5022), die dazu konfiguriert ist, die erste Netzwerkbandbreite mit der von der zweiten Anwendung angeforderten Netzwerkbandbreite zu vergleichen, um zu bestimmen, ob die erste Netzwerkbandbreite für die zweite Anwendung ausreicht oder nicht.

7. Endgerätevorrichtung (500) nach Anspruch 6, ferner umfassend:
eine Überwachungseinheit (504), die dazu konfiguriert ist, einen sich verändernden Zustand einer von der ersten Anwendung belegten Netzwerkbandbreite zu überwachen, wobei
die Zuweisungseinheit (503) ferner dazu konfiguriert ist, wenn die von der ersten Anwendung belegte Netzwerkbandbreite um eine dritte Netzwerkbandbreite reduziert wird und die dritte Netzwerkbandbreite einen voreingestellten Schwellenwert überschreitet, die dritte Netzwerkbandbreite der zweiten Anwendung zuzuweisen.

8. Endgerätevorrichtung (500) nach Anspruch 7, ferner umfassend:
eine Steuereinheit (505), die dazu konfiguriert ist, wenn die Zielanwendungsliste die zweite Anwendung nicht umfasst, die Anforderung der zweiten Anwendung für den Zugriff auf das Netzwerk abzulehnen.

9. Endgerätevorrichtung (500) nach Anspruch 8, wobei die erste Anwendung im Vordergrund läuft;
die Erfassungseinheit (501) ferner dazu konfiguriert ist, wenn die Zielanwendungsliste die zweite Anwendung umfasst, eine dritte Anwendung zu erfassen, die im Hintergrund auf das Netzwerk zugreift;
die Endgerätevorrichtung (500) ferner umfasst:
eine Freigabeeinheit (506), die dazu konfiguriert ist, unter der Bedingung, dass die Zielanwendungsliste die dritte Anwendung nicht umfasst, den Netzwerkzugriff der dritten Anwendung auszusetzen, um eine vierte Netzwerkbandbreite freizugeben; und
die Zuweisungseinheit (503) ferner dazu konfiguriert ist, die vierte Netzwerkbandbreite der zweiten Anwendung zuzuweisen.

10. Endgerätevorrichtung (500) nach einem der Ansprüche 6-9, wobei
die Bestimmungseinheit (502) ferner dazu konfiguriert ist, zu detektieren, ob die Endgerätevorrichtung eine Netzwerkgeschwindigkeits-Schutzfunktion aktiviert, wobei die Netzwerkgeschwindigkeits-Schutzfunktion dazu konfiguriert ist, eine ausreichende Netzwerkbandbreite für die Spielanwendung sicherzustellen; und
die Steuereinheit (505) ferner dazu konfiguriert ist, wenn die Endgerätevorrichtung die Netzwerkgeschwindigkeits-Schutzfunktion aktiviert, die Anforderung der zweiten Anwendung für den Zugriff auf das Netzwerk abzulehnen.

11. Computerlesbares Speichermedium, das ein Computerprogramm speichert, das für eine elektronische Datenvermittlung konfiguriert ist, wobei das Computerprogramm Befehle umfasst, um die Endgerätevorrichtung nach Anspruch 6 zu veranlassen, die Schritte des Verfahrens nach einem der Ansprüche 1-5 auszuführen.

## Revendications

1. Procédé de gestion de bande passante de réseau, réalisé par un dispositif de terminal, comprenant :
la détection qu'une première application dans le dispositif de terminal accède à un réseau ; **caractérisé par**,
l'acquisition d'une requête d'une deuxième application demandant l'accès au réseau, dans lequel la première application est une application de jeu (101), la requête comprend une deuxième bande passante de réseau et une bande passante de réseau requise par la deuxième application, et la deuxième bande passante de réseau est la plus petite bande passante de réseau requise par la deuxième application ;
l'analyse syntaxique de la requête de la deuxième application demandant l'accès au réseau pour acquérir une bande passante de réseau requise par la deuxième application ;
la comparaison d'une première bande passante de réseau présentement inoccupée du dispositif terminal à la bande passante de réseau requise par la deuxième application pour déterminer que la première bande passante de réseau est suffisante ou non pour la deuxième application ;
quand la première bande passante de réseau est insuffisante pour la deuxième application, la détection qu'une liste d'applications cibles comprend ou non la deuxième application ;
quand la liste d'applications cibles comprend la deuxième application, l'attribution de la deuxième bande passante de réseau à la deuxième application en vue de son utilisation, la deuxième bande passante de réseau étant plus petite que la première bande passante de réseau (104).

2. Procédé selon la revendication 1, comprenant en outre :
la surveillance d'un état changeant d'une bande passante de réseau occupée par la première application (305) ; et
quand la bande passante de réseau occupée par la première application est réduite par une troisième bande passante de réseau et la troisième bande passante de réseau dépasse une valeur de seuil prédéfinie, l'attribution de la troisième bande passante de réseau à la deuxième application (306).

3. Procédé selon la revendication 1, comprenant en outre :
quand la liste d'applications cibles ne comprend pas la deuxième application, le refus de la requête de la deuxième application demandant l'accès au réseau.

4. Procédé selon la revendication 3, dans lequel la première application est exécutée en premier plan, et
le procédé comprenant en outre :
quand une liste d'applications cibles comprend la deuxième application, l'acquisition d'une troisième application qui accède au réseau en arrière-plan ;
quand la liste d'applications cibles ne comprend pas la troisième application, l'arrêt de l'accès au réseau de la troisième application pour libérer une quatrième bande passante de réseau ; et
l'attribution de la quatrième bande passante de réseau à la deuxième application.

5. Procédé selon l'une quelconque des revendications 1 à 4, comprenant en outre, après l'acquisition de la requête de la deuxième application demandant l'accès au réseau :
la détection que le dispositif terminal valide ou non une fonction de protection de vitesse de réseau, la fonction de protection de vitesse de réseau étant configurée pour garantir une bande passante réseau suffisante pour l'application de jeu ; et
quand la fonction de protection de vitesse de réseau est validée, le refus de la requête de la deuxième application demandant l'accès au réseau.

6. Dispositif de terminal (500), **caractérisé en ce qu'**il comprend :
une unité d'acquisition (501), configurée pour détecter qu'une première application dans le dispositif de terminal accède à un réseau, acquérir une requête d'une deuxième application demandant l'accès au réseau, dans lequel la première application est une application de jeu, la requête comprend une deuxième bande passante de réseau et une bande passante de réseau requise par la deuxième application, et la deuxième bande passante de réseau est la plus petite bande passante de réseau requise par la deuxième application ;
une unité de détermination (502), configurée pour détecter qu'une première bande passante présentement inoccupée du dispositif de terminal est suffisante ou non pour la deuxième application ;
l'unité de détermination (502) est configurée en outre pour, quand la première bande passante de réseau est insuffisante pour la deuxième application, détecter qu'une liste d'applications cibles comprend ou non la deuxième application ; et
une unité d'attribution (503), configurée pour, quand la liste d'applications cibles comprend la deuxième application, attribuer la deuxième bande passante de réseau à la deuxième application en vue de son utilisation, la deuxième bande passante de réseau étant plus petite que la première bande passante de réseau ;
dans lequel l'unité de détermination (502) comprend :
une sous-unité d'analyse syntaxique (5021), configurée pour analyser syntaxiquement la requête de la deuxième application demandant l'accès au réseau afin d'acquérir une bande passante de réseau requise par la deuxième application ; et
une sous-unité de comparaison (5022), configurée pour comparer la première bande passante de réseau à la bande passante de réseau requise par la deuxième application pour déterminer que la première bande passante de réseau est suffisante ou non pour la deuxième application.

7. Dispositif de terminal (500) selon la revendication 6, comprenant en outre :
une unité de surveillance (504), configurée pour surveiller un état changeant d'une bande passante de réseau occupée par la première application,
dans lequel l'unité d'attribution (503) est configurée en outre pour, quand la bande passante de réseau occupée par la première application est réduite par une troisième bande passante de réseau et la troisième bande passante de réseau dépasse une valeur de seuil prédéfinie, attribuer la troisième bande passante de réseau à la deuxième application.

8. Dispositif de terminal (500) selon la revendication 7, comprenant en outre :
une unité de commande (505), configurée pour, quand la liste d'applications cibles ne comprend pas la deuxième application, refuser la requête de la deuxième application demandant l'accès au réseau.

9. Dispositif de terminal (500) selon la revendication 8, dans lequel la première application est exécutée en premier plan ;
l'unité d'acquisition (501) est configurée en outre pour, quand la liste d'applications cibles comprend la deuxième application, acquérir une troisième application qui accède au réseau en arrière-plan ;
le dispositif de terminal (500) comprenant en outre :
une unité de libération (506), configurée pour, quand la liste d'applications cibles ne comprend pas la troisième application, arrêter l'accès au réseau de la troisième application afin de libérer une quatrième bande passante de réseau ; et
l'unité d'attribution (503) est configurée en outre pour attribuer la quatrième bande passante de réseau à la deuxième application.

10. Dispositif de terminal (500) selon l'une quelconque des revendications 6 à 9, dans lequel
l'unité de détermination (502) est configurée en outre pour détecter que le dispositif de terminal valide présentement ou non une fonction de protection de vitesse de réseau, la fonction de protection de vitesse de réseau étant configurée pour garantir une bande passante de réseau suffisante pour l'application de jeu ; et
l'unité de commande (505) est configurée en outre, quand le dispositif de terminal valide la fonction de protection de vitesse de réseau, refuser la requête de la deuxième application demandant l'accès au réseau.

11. Support de mémorisation lisible par ordinateur, mémorisant un programme informatique configuré pour commuter des données électroniques, le programme informatique comprenant des instructions pour amener le dispositif de terminal selon la revendication 6 à exécuter les étapes du procédé selon l'une quelconque des revendications 1 à 5.
